**Europäisches Patentamt**

**European Patent Office**

**Office européen des brevets**

(19)

(11) Numéro de publication : **0 500 664 B1**

## (12) FASCICULE DE BREVET EUROPEEN

(45) Date de publication du fascicule du brevet :
**23.06.93 Bulletin 93/25**

(51) Int. Cl.⁵ : **E21B 43/25, E21B 33/138**

(21) Numéro de dépôt : **90916760.3**

(22) Date de dépôt : **09.11.90**

(86) Numéro de dépôt international :
**PCT/FR90/00802**

(87) Numéro de publication internationale :
**WO 91/07570 30.05.91 Gazette 91/12**

(54) **PROCEDE AMELIORE DE TRANSPORT DES PARTICULES EN MILIEU POREUX.**

(30) Priorité : **09.11.89 FR 8914706**

(43) Date de publication de la demande :
**02.09.92 Bulletin 92/36**

(45) Mention de la délivrance du brevet :
**23.06.93 Bulletin 93/25**

(84) Etats contractants désignés :
**AT BE CH DE DK ES FR GB GR IT LI LU NL SE**

(56) Documents cités :
**EP-A- 0 073 612**
**EP-A- 0 095 365**
**EP-A- 0 102 269**
**US-A- 3 598 181**
**US-A- 3 650 326**
**US-A- 3 763 934**

(73) Titulaire : **SOCIETE NATIONALE ELF AQUITAINE**
**Tour Elf, 2, Place de la Coupole, La Défense 6**
**F-92400 Courbevoie (FR)**

(72) Inventeur : **CHENEVIERE, Pascal**
**2, rue Déglin**
**F-54000 Nancy (FR)**
Inventeur : **DE FARCY DE MALNOE, Jacques-Philippe**
**164, les Jardins de Nanbours**
**F-61350 Auzielle (FR)**
Inventeur : **PUTZ, Antide**
**85, avenue des Lauriers**
**F-64000 Pau (FR)**
Inventeur : **SARDIN, Michel**
**115, rue du Petit-Arbois**
**F-54520 Laxou (FR)**

(74) Mandataire : **Ohresser, François et al**
**Société Nationale Elf Aquitaine Division**
**Proprieté Industrielle Tour Elf**
**F-92078 Paris La Défense Cédex 45 (FR)**

EP 0 500 664 B1

## Description

La présente invention a pour objet un procédé amélioré d'injection et de transport de particules, microorganismes notamment, dans un milieu poreux naturel.

Les techniques de récupération du pétrole, dites primaires et secondaires, utilisées efficacement, conduisent à l'extraction d'au maximum 35 à 40% du pétrole brut contenu dans un réservoir. Les techniques de récupération améliorée, dites tertiaires, consistent à extraire tout ou partie de cette huile résiduelle, notamment par balayage à l'eau de la zone, en visant soit à modifier les propriétés de l'huile en place, soit à modifier les propriétés de l'eau de balayage en augmentant sa viscosité par addition de polymères organiques hydrosolubles ou en atténuant les phénomènes de répulsion entre l'eau et l'huile par addition de tensioactifs.

On connaît une autre technique, différente en concept et en application, qui est le colmatage des zones à haute perméabilité du réservoir qui sont très préjudiciables à la production de l'huile, par des polymères à haute viscosité obtenus, le cas échéant, par des réticulations.

Les composés polymères ou tensio-actifs utilisés dans ces divers types de procédé peuvent être soit synthétiques, fabriqués par voie chimique, soit naturels et par exemple fabriqués par voie microbiologique en utilisant des microorganismes, bactéries notamment, susceptibles de transformer par métabolisation des substrats carbonés convenables, tels que les sucres ou les hydrocarbures.

Ces procédés et composés sont par exemple décrits dans le brevet US 3 650 326 qui vise un procédé de récupération assistée dans lequel on utilise un milieu aqueux de balayage comportant un viscosifiant produit par culture bactérienne, l'ensemble viscosifiant, bactéries et milieu de culture étant introduit dans le milieu de balayage.

Le brevet US 3 598 181 décrit un procédé analogue précisant le rôle important joué par un tensio-actif anionique dans la formation de l'agent viscosifiant.

Le brevet US 3 763 934 décrit un procédé de colmatage des formations perméables utilisant différents polymères synthétiques tels que les polyacrylamides, les dérivés de la cellulose, les gommes hydrosolubles.

La demande de brevet européen n° 073 612 illustre l'utilisation de mélanges du biopolymère xanthane et de tensio-actifs de type polyglycol pour contrôler la mobilité de la solution.

Par ailleurs, il a déjà été envisagé de produire in-situ dans la formation, les produits biosurfactants ou biopolymères nécessaires à l'application spécifique envisagée en injectant dans cette formation les microorganismes, le substrat convenable et leurs éléments nutritifs. De tels procédés sont notamment décrits dans les brevets US n° 3 340 930 et 4 522 261.

Le succès de la production in-situ dépend naturellement de la sélection des souches appropriées capables de se développer dans l'environnement du réservoir, mais également de la capacité à faire parvenir à destination, c'est-à-dire la formation à traiter, le microorganisme sans que sur la grande distance à parcourir, il ne soit bloqué dans une zone à faible perméabilité ou qu'en chemin, il ne rencontre un substrat de croissance stimulateur qui entraîne sa multiplication et/ou la production de composés créant un bouchon pouvant, par exemple, entraîner le colmatage du puits d'injection.

Le succès d'un tel procédé dépend donc beaucoup de la qualité de la migration des cellules au sein des milieux poreux qui présentent des variations importantes de porosité et de perméabilité. Cette difficulté majeure explique certainement pourquoi ce type de procédé a rarement été utilisé par l'industrie pétrolière et essentiellement en solution de dernière extrémité, dans le cas où le puits est destiné en définitive à être fermé.

L'invention a pour but de pallier cet inconvénient en proposant des moyens favorisant le transit de suspensions particulaires, bactériennes notamment, dans des milieux poreux naturels.

Ces moyens de transport de suspensions particulaires, bactériennes notamment, dans les milieux poreux ont été étudiés non seulement dans l'optique de procédés de récupération améliorée du pétrole, mais aussi dans celui de tout processus pour lequel il est nécessaire de transporter des particules solides de faible taille dans des milieux poreux et notamment, le problème de la réhabilitation des sols et des nappes phréatiques pour lequel il peut être indispensable d'implanter, et donc de transporter, des suspensions bactériennes permettant d'obtenir in-situ une activité d'épuration ou de dépollution par voie microbienne. On peut citer également ment le cas de la protection de sites naturels de stockage pour lesquels il serait avantageux d'implanter des systèmes biologiques améliorant le confinement des matériaux stockés.

L'invention a pour objet un procédé d'injection et de propagation de particules solides de petites dimensions dans un milieu poreux naturel caractérisé en ce que, dans une première étape, on conditionne ledit milieu par un balayage au moyen d'une solution aqueuse équilibrée contenant au moins un composé hydrocarboné choisi parmi les polymères hydrosolubles ou hydrodispersables et les tensio-actifs anioniques, puis, dans une deuxième étape, on injecte dans ledit milieu un bouchon de particules solides mises en suspension dans un milieu aqueux équilibré et contenant en outre au moins un composé hydrocarboné choisi parmi les polymères hydrosolubles ou hydrodispersables et les tensio-actifs anioniques et dans une troisième étape, on pousse ledit bouchon de particules par un milieu aqueux convenable.

Dans une variante préférée de mise en oeuvre du procédé de l'invention, on ajoutera au milieu de poussée au moins un composé hydrocarboné choisi parmi les polymères hydrosolubles ou hydrodispersables et les tensio-actifs anioniques.

On peut observer que les composés hydrocarbonés utilisés au cours de chacune des différentes étapes pourront être identiques ou différents. Leur nature est indépendante de la particule solide injectée et propagée.

Le procédé de l'invention s'applique à l'injection et à la propagation au sein des milieux poreux de suspensions de particules de petites dimensions, dites microniques, c'est-à-dire dont le diamètre moyen est inférieur ou égal à environ 10μm. Le choix des particules à injecter dépendra de l'application spécifique envisagée. Ces particules pourront être d'origine naturelle et/ou minérale, par exemple, des bentonites, des argiles ou des latex. Elles pourront être constituées dans une application préférée du procédé par des cellules bactériennes susceptibles de produire in-situ des composés permettant de traiter de façon convenable le milieu poreux où elles sont implantées.

Dans l'application préférée du procédé de l'invention, on utilise comme particules des cellules bactériennes viables, non pathogènes, qui sont mises en oeuvre dans des conditions non prolifératives.

Ces cellules bactériennes seront, par exemple :

- des bâtonnets, ou des coques aérobies gram négatif, famille des Pseudomonadaceae ; (genres Pseudomonas - Xanthomonas) ; famille des Halobacteriaceae ; (genres Halobacterium - Halococcus) ;
- des bâtonnets gram négatif anaérobies facultatifs ; famille des Enterobacteriaceae ; famille des Vibrionaceae ;
- des bactéries gram négatif anaérobies ; genre Desulfovibrio ;
- des bactéries chimiolithotrophes gram négatif ; famille des Nitrobacteriaceae ; genres Thiobacillus/Sulfolobus ;
- des bactéries productrices de méthane ; famille des Methanobacteriaceae ;
- des coques anaérobies facultatifs gram positif, ou aérobies ; famille des Micrococcaceae ; famille des Streptococcaceae (genre Leuconostoc) ;
- bâtonnets et coques formant des endospores ; famille des Bacillaceae (genres Bacillus - Clostridium) ;
- bactéries gram positif ne formant pas de spores en forme de bâtonnets ; famille des Lactobacillaceae ;
- bactéries gram positif appartenant aux Actinomycètes et groupes apparentés ; famille des Actinomycetaceae ; famille des Nocardiaceae ; famille des Micromonosporaceae ; famille des Streptomycetaceae.

Les solutions ou milieux aqueux utilisés dans le procédé doivent être équilibrés. On entend par équilibré, dans la présente demande, une solution ou un milieu aqueux compatible avec l'eau du milieu poreux à traiter, ce qui pourra être atteint, par exemple, par adjonction au dit milieu ou solution des principaux sels du milieu poreux à traiter. La présence de sels au sein de la suspension est importante pour une propagation spécifique des particules injectées au sein du milieu poreux. En effet, elle évite la mobilisation des argiles ou de toute autre particule colloïdale présente dans le milieu poreux et par ailleurs, elle préserve l'intégrité des particules transportées, notamment s'il s'agit de cellules bactériennes, en limitant les phénomènes de gonflement osmotique. Il est important que le fluide injecté soit compatible avec la nature chimique du milieu poreux traité. La composition ionique du fluide sera par exemple celle d'une eau de gisement reconstituée, comportant $MgCl_2$, $6H_2O$ ; $CaCl_2$, $2H_2O$ ; $K_2SO_4$ ; $Na_2SO_4$ ; $FeSO_4$, $7H_2O$ ; $NaCl$. Elle pourra être, dans certains cas, très simplifiée et ne mettre en jeu qu'un seul sel ($NaCl$) ou un mélange de deux sels $NaCl$ et $CaCl_2$, dont on pourra faire varier la proportion selon la nature du milieu poreux à traiter.

Le composé hydrocarboné utilisé au cours de l'une des étapes pourra être un agent tensio-actif anionique qui sera utilisé seul ou en mélange avec d'autres agents tensio-actifs anioniques ou non-ioniques. La concentration totale en tensio-actifs sera généralement comprise entre $10^{-5}$ mole.l$^{-1}$ et $10^{-1}$ mole.l$^{-1}$ et de préférence entre $10^{-5}$ et $10^{-3}$ mole.l$^{-1}$. La concentration du milieu aqueux en agent tensio-actif dépendra du choix du tensio-actif et de la nature géochimique de la formation à traiter : pH et salinité de la formation notamment. Par exemple, la concentration en tensio-actif, et la quantité totale à injecter, sera fonction de la salinité de l'eau de formation, c'est-à-dire sa teneur en cation alcalin et sa teneur en cations alcalino-terreux. Plus la concentration en cations alcalino-terreux sera importante, plus la quantité de tensio-actif à injecter, et donc sa concentration dans le milieu aqueux d'injection, sera élevée. En revanche, si la salinité est due à une concentration en cation alcalin élevée, la quantité de tensio-actif nécessaire au procédé sera relativement moins importante qu'en présence de cations alcalino-terreux.

Comme agent tensio-actif anionique, on peut utiliser par exemple :

- les savons des acides gras tels que les sels de sodium ou de potassium d'acides gras saturés ou insaturés en $C_{10}$-$C_{24}$ ou de dérivés d'acides aminocarboxyliques comme le N-lauryl sarconisate de sodium,
- les sulfates et produits sulfatés tels que les alcoylsulfates alcalins du type laurysulfate de sodium : les sulfates d'alcools gras polyoxyoéthylénés, les sulfates d'alcoylphénols polyoxyéthylénés, les sulfates d'arylalkylphénols polyoxyéthylénés,
- les esters phosphoriques de dérivés oxyéthylénés tels que les phosphates d'alcools gras polyoxyéthylénés, les phosphates d'alcoylphénols polyoxyéthylénés, les phosphates d'arylalkylphénols polyoxyéthylénés,
- les sulfonates alcalins tels que les alcoylsulfonates par exemple les alkylsulfoesters des acides en $C_4$-$C_{30}$ du type dialkylsulfosuccinate de sodium, les alcoylbenzène-sulfonates comme le nonylbenzènesulfonate de sodium et le dodecylbenzène-sulfonate de sodium et les lignosulfonates.

Naturellement, lorsqu'on injectera des cellules bactériennes, on veillera à choisir un tensio-actif non toxique vis-à-vis desdites cellules et compatible avec le milieu poreux à traiter.

Le composé hydrocarboné utilisé au cours de l'une des étapes pourra être un polymère viscosifiant hydrosoluble ou hydrodispersable de masse moléculaire élevée. La présence de ce polymère permet notamment de stabiliser la suspension de particules. On entend par polymère viscosifiant de masse moléculaire élevée un polymère ayant une masse supérieure à 500.000 daltons et de préférence comprise entre 1 et 10 millions de daltons (1 Dalton = $1.66024.10^{-24}$grams). Ce polymère devra être insensible à l'action des bactéries éventuellement présentes.

A titre d'exemple de polymères utilisables dans le procédé de l'invention, on peut citer :
- les polymères synthétiques tels que les polyacrylamides partiellement hydrolysés, les copolymères acrylamide-acide acrylique, les copolymères acrylamideacrylate, les polyacrylates salifiés, les polyméthacrylates salifiés, les polyacrylonitriles partiellement hydrolysés, les polystyrènes sulfonates, les copolymères styrène sulfonés-anhydridre maléique, etc...
- les biopolymères tels que le xanthane, le scléroglucane, le dextrane, les polyhydroxybutyrates (PHB), les mannanes, pullulane, curdlane...,
- les dérivés de la cellulose : carboxyméthylcellulose (CMC), hydroxypropylméthylcellulose, carboxyméthylhydroxy-éthylcellulose...,
- les polymères naturels : gomme arabique, alginates.

La teneur en polymère du milieu aqueux d'injection sera en général comprise entre 10 et 5000 ppm et de préférence entre 50 et 450 ppm.

Le polymère préféré du procédé de l'invention sera un polyacrylamide (PAA), partiellement hydrolysé. Le degré d'hydrolyse sera généralement compris entre 10 et 70% et de préférence entre 15 et 35%.

Dans une variante du procédé de l'invention, le milieu aqueux d'injection des particules au cours de la deuxième étape comportera, à côté des sels un mélange de polymères hydrosolubles ou hydrodispersables et de tensio-actif anionique. Les teneurs du milieu aqueux d'injection en polymères et en tensio-actifs seront analogues à celles décrites précédemment pour les procédés utilisant le tensio-actif ou le polymère seul.

Il pourra également être avantageux d'utiliser un mélange polymère-tensio-actif au cours de la première étape de conditionnement.

La quantité de suspensions particulaires, notamment de bactéries, à injecter doit être en rapport avec le volume poreux à traiter. Dans le cas du traitement d'un gisement pétrolier, il s'agira des zones à haute perméabilité qui représentent en général au maximum quelques % du volume total du milieu poreux. La quantité de suspensions à injecter tiendra compte de ce volume poreux à traiter, ainsi que, dans une certaine mesure, du volume poreux de la zone de transit, c'est-à-dire, de la distance séparant la zone d'injection de la zone à traiter. La quantité de particules à mettre en suspension est généralement comprise entre $10^5$ et $10^{10}$ particules par cm³.

Lors de la mise en oeuvre du procédé, on injecte un fluide aqueux contenant les composés hydrocarbonés sans les particules, puis un milieu aqueux d'injection contenant l'ensemble des éléments, la quantité totale de tensio-actif et/ou de polymère doit être suffisante pour assurer un bon conditionnement des zones à travers lesquelles la suspension particulaire doit transiter. En général, le volume total de la solution de fluide aqueux utilisé pour les deux premières étapes dépassera rarement 30% du volume total du milieu poreux et sera souvent inférieur à 20% de ce volume, la quantité de composé hydrocarboné sera optimisée en fonction de la surface spécifique du milieu poreux.

Le volume de la suspension injectée au cours de la deuxième étape, c'est-à-dire le bouchon, représentera en général entre 10 et 50% du volume injecté en première étape et sera en général compris entre 2 et 10% du volume poreux total du milieu poreux.

Le procédé de l'invention sera mieux compris à la lecture des exemples ci-après donnés à titre de simple illustration.

Les exemples 1 à 4 ci-après se rapportent à des bactéries appartenant à la famille des Streptococcaceae et plus particulièrement au genre Leuconostoc. Il s'agit d'une bactérie <u>Leuconostoc mesenteroides</u>.

Exemples 1 à 4 :

Les expériences ont été réalisées dans un dispositif de laboratoire dans lequel une colonne de 18 cm de longueur et de diamètre interne 2,54 cm, est remplie avec du sable d'Entraygues et présente un volume poreux de 45 cm³ (Vp).

Ce sable très siliceux (98% de silice) comporte très peu d'argile et ne nécessite pas de traitement préalable afin d'éviter les perturbations dans les mesures réalisées sur les milieux poreux reconstitués.

- Les particules sont constituées de bactéries <u>Leuconostoc mesenteroides</u> cultivées sur un milieu à base de glucose et constitué des éléments nutritifs habituels. En fin de phase exponentielle, la culture est centrifugée à 9500 tours par minute pendant 15 minutes et lavée dans une solution de NaCl 0,1 N. Trois cycles centrifugation-resuspension permettent d'éliminer les constituants du milieu de culture qui pourraient perturber les mesures ultérieures.

- Le polymère utilisé est le polyacrylamide BASF SEPAFLOOD hydrolysé à 25%, dilué à 250 ppm en solution aqueuse (PAAH).

- Le tensio-actif anionique utilisé est le dodecyle sulfate de sodium (SDS) à une concentration de $10^{-3}$ M/l.

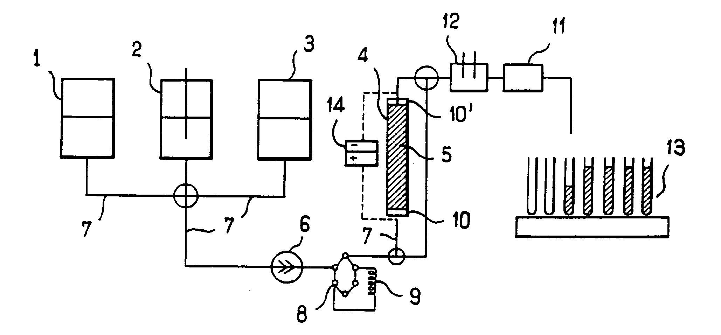

Le dispositif de laboratoire utilisé est décrit ci-après en regard de la figure 1 ci-jointe.

Ce dispositif comprend :

- des réservoirs (1) (2) (3), contenant les fluides injectés successivement dans une colonne (4) remplie du milieu poreux (5) concerné.

- un ensemble de capillaires (7) dans lesquels les fluides, véhiculés par une pompe à seringues (6) circulent,

- une vanne (8) d'injection possédant 6 voies et 2 positions, qui permet d'injecter un volume connu de la suspension (5) contenu dans la boucle d'injection (9),

- la colonne de milieu poreux (5), consolidé ou non, est munie d'embouts (10) (10'), disperseurs propres à répartir le fluide à l'entrée et à la sortie de la colonne, et laissant circuler aussi bien les solutés et les particules injectées,

- deux détecteurs en ligne : un spectrophotomètre U.V. (11) réglé à 280 nm qui fournit une mesure de densité optique corrélée avec la concentration en particules, et un conductimètre (12) qui permet d'enregistrer les variations de salinité dans l'effluent,

- un collecteur de fractions (13) qui permet d'effectuer a posteriori des mesures complémentaires sur l'effluent,

- un capteur de pression (14) aux bornes de la colonne permettant d'évaluer la perte de charge.

Dans l'exemple 1, le sable d'Entraygues constituant le milieu poreux a été dans une première étape balayé avec une solution saline NaCl 0,1 M/l jusqu'à l'obtention d'une composition stationnaire dans l'effluent.

Dans une deuxième étape, on injecte par la boucle d'injection un créneau de particules à $5\text{-}7.10^8$ particules par cm³ de suspension dans une solution saline identique à celle de la première étape, impulsion correspondant à 2% du volume poreux de la colonne (45 cm³). La colonne est maintenue sous un écoulement permanent de solution à débit constant de 0,2 cm³ min$^{-1}$ permettant le déplacement par poussée du créneau de particules.

Dans l'exemple 2, on remplace pour l'ensemble des étapes, les solutions salines par une solution de NaCl 0,1 M/l additionnée de 250 ppm de PAAH.

Dans l'exemple 3, on remplace pour l'ensemble des deux étapes la solution saline par une solution de NaCl 0,1 M/l additionnée de SDS $10^{-3}$ M.l$^{-1}$.

Dans l'exemple 4, on répète l'exemple 1 en remplaçant la solution saline par une solution saline NaCl 0,1 M/l additionnée de 250 ppm de PAAH et de SDS $10^{-3}$ M.l$^{-1}$.

Les conditions opératoires de chacun de ces exemples et les résultats obtenus exprimés en % de restitution des particules injectées : Nombre de particules récupérées / Nombre de particules, par mesure de la densité optique, après étalonnage, sont résumés dans le tableau 1 ci-dessous.

On constate que, en l'absence des composés hydrocarbonés anioniques du procédé de l'invention, on aboutit au colmatage de la colonne et une rétention quasi-totale des bactéries dans le milieu poreux correspondant à une augmentation de la perte de charge au sein de la colonne (ex. 1) alors que cette augmentation au sein de la colonne est quasiment nulle dans les exemples 2 à 4, ce qui correspond à un excellent pourcentage de restitution.

TABLEAU 1

| N° | Concentration en particules /ml | Composition de la phase aqueuse (Sels et additifs) | Volume injecté (en % du $V_p$) | Restitution % |
|----|----|----|----|----|
| 1 | $5-7.10^8$ | NaCl : $10^{-1}$ N | 2 | 0,05 |
| 2 | $5-7.10^8$ | NaCl : $10^{-1}$ N <br> PAA 250 ppm | 2 | 25 |
| 3 | $5-7.10^8$ | NaCl : $10^{-1}$ N <br> SDS $10^{-3}$ M.$1^{-1}$ | 2 | 42 |
| 4 | $5-7.10^8$ | NaCl : $10^{-1}$ N <br> PAA 250 ppm et <br> SDS $10^{-3}$ M.$1^{-1}$ | 2 | 48 |

Exemples 5 à 22 :

La même expérience a été menée avec différents composés hydrocarbonés sur plusieurs types de particules solides (bactéries Leuconostoc mesenteroïdes, bactéries Bacillus subtilis, bentonite).

Les conditions opératoires précises des différentes étapes et les résultats obtenus pour chacun des exemples figurent dans le Tableau 2 ci-après.

Les conditions générales de ces expériences et les abréviations utilisées dans le Tableau 2 sont les suivantes :

1) Etape de conditionnement :

- Le volume est exprimé en Vp, c'est-à-dire le volume poreux total du milieu.
- Le milieu de conditionnement comporte toujours du NaCl 0.1 N, qui n'est pas mentionné dans le tableau, additionné, le cas échéant, de :
    . Dodécylsulfate de sodium, $10^{-3}$ mole/l : S en abrégé
    . Polyacrylamide hydrolysé à 30%, 250 ppm : P en abrégé

2) Etape d'injection du bouchon :

- Le volume du bouchon est égal à 0.02 Vp.
- Le milieu d'injection comprend comme particules des bactéries Leuconostoc mesenteroïdes, soit $10^{10}$ bactéries par ml dans les exemples 5 à 16 sauf pour l'exemple 13 où $10^9$ bactéries/ml ont été injectées : L en abrégé.
    . 2,5 $10^9$ bactéries Bacillus subtilis par ml dans les exemples 17 et 18 : B en abrégé.
    . 100 ppm de bentonite dans les exemples 19 à 21 : b en abrégé.
- Le milieu d'injection contient toujours du NaCl 0.1 N (non mentionné) et le cas échéant, les produits dénommés S et P ci-dessus aux mêmes quantités, ou des lignosulfonates de sodium à 250 ppm : 1 en abrégé.

3) Milieu de poussée :

La solution aqueuse contiendra toujours du NaCl 0.1 N et le cas échéant les produits P et I mentionnés ci-dessus aux mêmes quantités.

La restitution des particules injectées sous forme de créneau (le bouchon) est évaluée en sortie du milieu poreux par la quantité de particules récupérées pour un volume du milieu de poussée égale à 1 Vp, exprimée en % par rapport à la quantité injectée.

Tableau 2

| N° Ex | vol (Vp) | Conditionnement composition | Injection particules composition | Eau de poussée composition | Restitu- tion % |
|---|---|---|---|---|---|
| 5 | 0,1 | S | L | - | 3,9 |
| 6 | 2,0 | S | L | - | 27,0 |
| 7 | - | - | L + P | - | 0,1 |
| 8 | - | - | L + P + S | - | 0,6 |
| 9 | 0,5 | S + P | L + P + S | - | 77,0 |

| 10 | sat | P | L + P | P | 70,5 |
|---|---|---|---|---|---|
| 11 | 0,5 | P | L + P | P | 58,0 |
| 12 | 0,2 | P | L + P | P | 53,0 |
| 13 | 0,2 | P | L + P | P | 46,0 |
| 14 | 0,2 | P | L + S | 1 | 56,0 |
| 15 | 0,2 | P | L + 1 | - | 33,0 |
| 16 | 0,2 | P | L + P + S | - | 24,7 |
| 17 | - | - | B + S | P | 15,5 |
| 18 | 0,2 | P | B + S | P | 26,5 |
| 19 | - | - | b | - | 0,1 |
| 20 | 0,2 | P | b | - | 3,0 |
| 21 | 0,2 | P | b + P | P | 33,0 |

"sat" signifie milieu saturé avec le milieu aqueux de conditionnement

La comparaison des résultats obtenus dans ces différentes expériences montre le rôle joué par chacune des différentes étapes du procédé et l'incidence d'une utilisation simultanée d'un polymère et d'un tensio-actif.

Les expériences 5 à 8 mettent en évidence la faible efficacité du procédé utilisant un composé hydrocarboné uniquement au cours d'une seule des étapes. Seul un conditionnement de 2 fois le volume de pore, incompatible avec une mise en oeuvre raisonnable du procédé (exp. 6) permet un transport notable de particules.

Au contraire, dès que les trois étapes sont mises en oeuvre successivement (exp. 11 à 14) le transport d'au moins 50% des particules est assuré après une poussée d'une fois le volume de pore.

L'intérêt de l'étape de poussée est concrètement démontré par les expériences 19 à 21. D'une restitution quasi nulle lors d'une injection de bentonite sans additifs, on passe à une restitution à un volume de pore de 33% par la mise en oeuvre du procédé complet.

L'utilisation de Bacillus (exp. 17 et 18), particules deux fois plus grosses que les Leuconostoc est possible. La restitution, substantielle, est cependant moins bonne : 26,5% à comparer au 50% en moyenne obtenus précédemment.

Le lignosulfonate de sodium apparaît comme un bon produit à condition qu'il puisse être utilisé sans problèmes de toxicité (Exp. 14 et 15).

## Revendications

1. Procédé d'injection et de propagation de particules solides de petites dimensions, dites microniques, dans un milieu poreux naturel caractérisé en ce que , dans une première étape, on conditionne ledit milieu par un balayage au moyen d'une solution aqueuse équilibrée contenant au moins un composé hydrocarboné choisi parmi les polymères hydrosolubles, hydrodispersables et les tensio-actifs anioniques, puis, dans une deuxième étape on injecte dans ledit milieu un bouchon de particules solides mises en suspension dans un milieu aqueux équilibré et contenant en outre au moins un composé hydrocarboné choisi parmi les polymères hydrosolubles ou hydrodispersables et les tensio-actifs anioniques et, dans une troisième étape, on pousse ledit bouchon de particules par un milieu aqueux convenable.

2. Procédé selon la revendication 1 caractérisé en ce que le milieu aqueux de poussée utilisé au cours de la troisième étape contient au moins un composé hydrocarboné choisi parmi les polymères hydrosolubles ou hydrodispersables et les tensio-actifs anioniques.

3. Procédé selon l'une des revendications 1 et 2 caractérisé en ce que lorsque un tensio-actif est utilisé dans un des milieux aqueux, sa teneur est comprise entre $10^{-5}$ et $10^{-1}$ M/l.

4. Procédé selon l'une des revendications 1 et 2 caractérisé en ce que lorsqu'un polymère est utilisé dans un des milieux aqueux, sa masse moléculaire supérieure à 500.000 daltons et de préférence comprise entre 1 et 10 millions de daltons.

5. Procédé selon la revendication 4 caractérisé en ce que la teneur en polymère du milieu aqueux est comprise entre 10 et 5000 ppm.

6. Procédé selon la revendication 5 caractérisé en ce que le polymère est un polymère naturel ou synthétique hydrodispersable.

7. Procédé selon l'une des revendications 4 à 6 caractérisé en ce que le polymère est un polyacrylamide partiellement hydrolysé.

8. Procédé selon la revendication 1 caractérisé en ce que le milieu aqueux utilisé lors de la deuxième étape contient simultanément un agent tensio-actif anionique et un polymère de masse moléculaire supérieure à 500.000 daltons.

9. Procédé selon la revendication 8 caractérisé en ce que la teneur en agent tensio-actif est comprise entre $10^{-5}$ et $10^{-1}$ M/l et la teneur en polymère comprise entre 10 et 5000 ppm.

10. Procédé selon l'une des revendications 1 à 9 caractérisé en ce que lors de la première étape de conditionnement on balaye le milieu poreux par un volume de solution aqueuse représentant moins de 30% du volume poreux total à traiter.

11. Procédé selon la revendication 10 caractérisé en ce que la quantité de milieu aqueux injectée au cours de la deuxième étape représente de 2 à 10% du volume poreux total à traiter.

12. Procédé selon la revendication 11 caractérisé en ce que la teneur du milieu aqueux en bactéries est comprise entre $10^5$ et $10^{10}$ bactéries par ml.

## Patentansprüche

1. Verfahren zur Einspritzung und Verteilung von mikroskopisch kleinen Feststoffteilchen in einem natürlichen porösen Medium, dadurch **gekennzeichnet,** daß man auf einer ersten Stufe das Medium durch Spülen mit einer wässerigen äquilibrierten Lösung konditioniert, die wenigstens eine Kohlenwasserstoffverbindung enthält, ausgewählt unter wasserlöslichen, wasserdispergierbaren Polymeren und anionischen Tensiden, auf einer zweiten Stufe in das Medium einen Pfropfen aus Feststoffteilchen einspritzt, die in einem äquilibrierten wässerigen Medium suspendiert sind und außerdem noch wenigstens eine Kohlenwasserstoffverbindung enthalten, ausgewählt unter wasserlöslichen, wasserdispergierbaren Polymeren und anionischen Tensiden, und auf einer dritten Stufe den Teilchenpfropfen mit einem geeigneten wässerigen Medium vorwärtstreibt.

2. Verfahren nach Anspruch 1, dadurch **gekennzeichnet,** daß das auf der dritten Stufe eingesetzte, zum Vorwärtstreiben verwendete wässerige Medium außerdem noch wenigstens eine Kohlenwasserstoffverbindung enthält, ausgewählt unter wasserlöslichen, wasserdispergierbaren Polymeren und anionischen Tensiden.

3. Verfahren nach einem der Ansprüche 1 und 2, dadurch **gekennzeichnet**, daß bei Verwendung eines Tensids in einem der wässerigen Medien dessen Gehalt $10^{-5}$ bis $10^{-1}$ M/l beträgt.

4. Verfahren nach einem der Ansprüche 1 und 2, dadurch **gekennzeichnet**, daß bei Verwendung eines Polymeren in einem der wässerigen Medien dessen Molekularmasse über 500.000 Dalton und vorzugsweise zwischen 1.000.000 und 10.000.000 Dalton beträgt.

5. Verfahren nach Anspruch 4, dadurch **gekennzeichnet**, daß der Polymergehalt des wässerigen Mediums zwischen 10 und 5000 ppm liegt.

6. Verfahren nach Anspruch 5, dadurch **gekennzeichnet**, daß das Polymer ein natürliches oder synthetisches wasserdispergierbares Polymer ist.

7. Verfahren nach einem der Ansprüche 4 bis 6, dadurch **gekennzeichnet**, daß das Polymer ein teilweise hydrolysiertes Polyacrylamid ist.

8. Verfahren nach Anspruch 1, dadurch **gekennzeichnet**, daß das auf der zweiten Stufe verwendete wässerige Medium außerdem auch noch ein anionisches Tensid und ein Polymer mit einer Molekularmasse von über 500.000 Dalton enthält.

9. Verfahren nach Anspruch 8, dadurch **gekennzeichnet**, daß der Gehalt an Tensid zwischen $10^{-5}$ und $10^{-1}$ M/l und der Gehalt an Polymer zwischen 10 und 5000 ppm liegen.

10. Verfahren nach einem der Ansprüche 1 bis 9, dadurch **gekennzeichnet**, daß man auf der ersten Stufe der Konditionierung das poröse Medium mit einem Volumen der wässerigen Lösung von wenigstens 30 % des zu behandelnden Gesamtvolumens des porösen Mediums spült.

11. Verfahren nach Anspruch 10, dadurch **gekennzeichnet**, daß die Menge des auf der zweiten Stufe eingespritzten wässerigen Mediums 2 bis 10 % des zu behandelnden Gesamtvolumens des porösen Mediums beträgt.

12. Verfahren nach Anspruch 11, dadurch **gekennzeichnet**, daß der Gehalt des wässerigen Mediums an Bakterien zwischen $10^5$ und $10^{10}$ Bakterien pro ml beträgt.

## Claims

1. Process for injecting and propagating small, so-called "micronic" solid particles into a natural porous medium, characterised in that, in a first stage, the said medium is conditioned by being swept with a balanced aqueous solution containing at least one hydrocarbon compound selected from water-soluble and water-dispersible polymers and anionic surfactants, then, in a second stage, a plug of solid particles suspended in a balanced aqueous medium and further containing at least one hydrocarbon compound selected from water-soluble or water-dispersible polymers and anionic surfactants is injected into the said medium, and, in a third stage, the said plug of particles is advanced by a suitable aqueous medium.

2. Process according to Claim 1, characterised in that the advancing aqueous medium used during the third stage contains at least one hydrocarbon compound selected from water-soluble or water-dispersible polymers and anionic surfactants.

3. Process according to either of Claims 1 and 2, characterised in that, when a surfactant is used in one of the aqueous media, its concentration is between $10^{-5}$ and $10^{-1}$ M/l.

4. Process according to either of Claims 1 and 2, characterised in that, when a polymer is used in one of the aqueous media, its molecular weight is greater then 500,000 daltons and is preferably between 1 million and 10 million daltons.

5. Process according to Claim 4, characterised in that the polymer content of the aqueous medium is between 10 and 5000 ppm.

6. Process according to Claim 5, characterised in that the polymer is a water-dispersible natural or synthetic polymer.

7. Process according to any one of Claims 4 to 6, characterised in that the polymer is a partially hydrolysed polyacrylamide.

8. Process according to Claim 1, characterised in that the aqueous medium used during the second stage contains both an anionic surfactant and a polymer having a molecular weight of more than 500,000 daltons.

9. Process according to Claim 8, characterised in that the surfactant concentration is between $10^{-5}$ and $10^{-1}$ M/l and the polymer concentration is between 10 and 5000 ppm.

10. Process according to any one of Claims 1 to 9, characterised in that, during the first conditioning stage, the porous medium is swept with a volume of aqueous solution representing less than 30% of the total volume of pores to be treated.

11. Process according to Claim 10, characterised in that the amount of aqueous medium injected during the second stage represents between 2 and 10% of the total volume of pores to be treated.

12. Process according to Claim 11, characterised in that the bacterial concentration of the aqueous medium is between $10^5$ and $10^{10}$ bacteria per ml.